# EUROPÄISCHE PATENTSCHRIFT

(11) **EP 3 507 966 B1**
(45) Veröffentlichungstag und Bekanntmachung des Hinweises auf die Patenterteilung: **11.08.2021**
(21) Anmeldenummer: 17734988.3
(22) Anmeldetag: 26.06.2017
(51) Int. Cl.: H04W 4/80, H04L 29/08, H04W 4/48

(54) **VERFAHREN ZUM AUFBAU EINES DRAHTLOSEN FAHRZEUG-NETZWERKS**
METHOD FOR ESTABLISHING A WIRELESS VEHICLE NETWORK
PROCÉDÉ D'IMPLÉMENTATION D'UN RÉSEAU HERTZIEN DE VÉHICULE

(30) Priorität: 02.09.2016 DE 102016010644
(43) Veröffentlichungstag der Anmeldung: 10.07.2019
(73) Patentinhaber: ZF CV Systems Europe BV, 1170 Brussels (BE)
(72) Erfinder: DIECKMANN, Thomas, 30982 Pattensen (DE); HÜBNER, Sören, 26316 Varel (DE); WOLF, Thomas, 30890 Barsinghausen (DE)
(74) Vertreter: Koschnitzki, Thomas
(86) Internationale Anmeldenummer: PCT/EP2017/000739
(87) Internationale Veröffentlichungsnummer: WO 2018/041381

(56) Entgegenhaltungen:
- DE-A1-102014 004 182
- DE-A1-102014 015 394
- US-A1- 2002 030 590
- US-A1- 2008 303 648

## Beschreibung

Die Erfindung betrifft ein Verfahren zum Aufbau eines drahtlosen Fahrzeug-Netzwerks mit wenigstens einer ersten Station in einem Zugwagen und einer zweiten Station in einem Anhänger, wobei die erste Station zum Aufbau des drahtlosen Netzwerks erforderliche Informationen versendet und ein der ersten Station zugeordnetes erstes Steuergerät von einem der zweiten Station zugeordneten zweiten Steuergerät über eine physische Schnittstelle zwischen Zugwagen und Anhänger eine definierte Nachricht übermittelt bekommt, nachdem das zweite Steuergerät mit elektrischer Energie versorgt ist und die beiden Steuergeräte über die physische Schnittstelle miteinander verbunden sind. Daneben betrifft die Erfindung ein Steuergerät und ein Computerprogramm, Computerprogrammprodukt oder eine App.

In der DE 10 2014 015 394 A1 ist ein Verfahren zum Aufbau und Betrieb eines drahtlosen Fahrzeug-Netzwerks beschrieben. Auf die Offenbarung wird Bezug genommen bzw. die Offenbarung in dem genannten Dokument soll vollinhaltlich auch Bestandteil der vorliegenden Anmeldung sein. Unter anderem ist der automatisierte Verbindungsaufbau zwischen einer ersten Station in einem Zugwagen und einer zweiten Station in einem Anhänger dargestellt. Der Versuch eines Verbindungsaufbaus startet, sobald bestimmte Randbedingungen erfüllt sind. Mit dem Start des Verbindungsaufbaus übersendet die erste Station per Funk sogenannte Beacons mit den in einem WLAN üblichen Angaben (SSID, Verschlüsselungsart, usw.) und mit zusätzlichen (frei wählbaren) Angaben. Dies geschieht auch dann, wenn noch kein Anhänger angekoppelt ist und der Verbindungsaufbau fehlschlagen muss.

In der US 2008/0303648 A1 ist ein Verfahren zur Kommunikation zwischen einem Zugfahrzeug und einem Anhänger beschrieben. Eine eindeutige Drahtlosverbindung soll in sicherer Weise aufgebaut werden, indem eine drahtgebundene Verbindung genutzt wird. Das Zugfahrzeug und der Anhänger weisen jeweils ein mobiles Kommunikationsterminal auf. Das mobile Kommunikationsterminal des Zugfahrzeugs und das mobile Kommunikationsterminal des Anhängers tauschen über die drahtgebundene Verbindung Identitätsinformationen aus. Anschließend kann eines der mobilen Kommunikationsterminals unter Benutzung der ausgetauschten Identitätsinformationen eine Radiofrequenzverbindung herstellen.

In der US 2002/0030590 A1 ist ein Verfahren zum Datenaustausch zwischen einem Zugfahrzeug und einem Anhänger beschrieben. Der Datenaustausch kann zwischen elektronischen Bremssystemen in dem Zugfahrzeug und dem Anhänger stattfinden.

Die DE 10 2014 004 182 A1 offenbart ein Verfahren zum Herstellen einer drahtlosen Verbindung zwischen einem Sender/Empfänger in einem Anhängerfahrzeug und einem externen Sender/Empfänger, wobei das Anhängerfahrzeug an ein Zugfahrzeug gekoppelt ist und über eine Leitung Signale vom Zugfahrzeug an das Anhängerfahrzeug übermittelt werden können. Das Verfahren startet mit der Übermittlung eines Auslösesignals über die Leitung vom Zugfahrzeug zum Anhängerfahrzeug.

Die DE 102013 217 684 A1 offenbart ein Verfahren zum Aufbau einer Funkverbindung zwischen einem Sender eines Anhängers und einem Empfänger einer Zugmaschine. Die für die drahtlose Verbindung zwischen Sender und Empfänger relevanten Daten werden über eine Kabelverbindung von der Zugmaschine zum Anhänger übertragen.

Als Zugwagen werden insbesondere motorbetriebene Nutzfahrzeuge angesehen. Diese weisen verschiedene elektronische Steuergeräte auf, welche über einen CAN-Datenbus Informationen austauschen. Typische Steuergeräte im Zugwagen sind Bremsen-Steuergerät, Motor-Steuergerät und Getriebe-Steuergerät. Typischerweise ist auch im Anhänger ein Bremsen-Steuergerät vorhanden, mit dem unter anderem Bremsen des Anhängers zur Durchführung einer Anti-Blockier-Regelung angesteuert werden. Dabei kann das Steuergerät im Anhänger an einen CAN-Datenbus angeschlossen sein.

Üblicherweise sind das Bremsen-Steuergerät des Anhängers und das Bremsen-Steuergerät des Zugwagens zum Austausch von Informationen miteinander verbunden, entweder über eine CAN-Verbindung nach ISO 11992 oder unter Zuhilfenahme einer elektrischen Versorgungsleitung zwischen Anhänger und Zugwagen, über die mittels der sogenannten Powerline Communication (PLC) Daten übertragen werden können. Das Bremsen-Steuergerät im Zugwagen stellt die vom Anhänger übermittelten Informationen auf dem CAN-Datenbus des Zugwagens (im CAN-Format) zur Verfügung. Dadurch sind die vom Bremsen-Steuergerät des Anhängers übermittelten Informationen für alle an den CAN-Datenbus des Zugwagens angeschlossenen Geräte lesbar.

Das Nachrichtenformat im CAN-Datenbus richtet sich nach der SAE J1939. Eine spezielle Nachricht des Bremsen-Steuergeräts im Anhänger wird als EBC1 bezeichnet und enthält gemäß der Norm Informationen über verschiedene Parameter einer Parametergruppe (PGN 61441). Außerdem ist jedem Parameter eine Nummer zugeordnet, die Suspect Parameter Number (SPN). Die SPN 1836 betrifft einen "Trailer ABS Status" und besteht aus zwei Bits, die jeweils "0" oder "1" sein können. Dadurch ergeben sich für den "Trailer ABS Status" vier Möglichkeiten (zitiert aus der SAE J1939):
00 Trailer ABS Status Information available but not active
01 Trailer ABS active
10 Reserved
11 Trailer ABS Status Information not available or parameter not supported

Die Nachricht EBC1 mit dem "Trailer ABS Status" liegt auf dem CAN-Datenbus des Zugwagens vor, sobald der Austausch der Informationen zwischen dem Bremsen-Steuergerät des Anhängers und dem Bremsen-Steuergerät des Zugwagens stattgefunden hat.

Aufgabe der vorliegenden Erfindung ist die Schaffung eines Verfahrens zum Aufbau des drahtlosen Fahrzeug-Netzwerks unter Einbeziehung von Zugwagen und Anhänger, wobei der Aufbau erst beginnt, wenn Zugwagen und Anhänger miteinander verbunden sind.

Zur Lösung der Aufgabe weist das erfindungsgemäße Verfahren die Merkmale des Anspruchs 1 auf. Insbesondere ist vorgesehen, dass die erste Station erst dann die zum Aufbau des drahtlosen Netzwerks erforderlichen Informationen drahtlos versendet, wenn die definierte Nachricht in der ersten Station vorliegt. Erfindungsgemäß wird darauf abgestellt, dass die erste Station im Zugwagen zunächst eine definierte Nachricht des Anhängers abwartet, bevor der Aufbau des drahtlosen Netzwerks gestartet wird. Die erste Station ist in erster Linie eine Kommunikationseinheit, mit der das drahtlose Netzwerk aufgespannt wird, und über die die drahtlose Kommunikation abgewickelt wird. Die Kommunikationseinheit kann aber auch in das erste Steuergerät integriert sein. Die erste Station beinhaltet dann die Kommunikationseinheit und das erste Steuergerät. Gleiches kann für die zweite Station gelten. Auch diese kann eine zweite Kommunikationseinheit und das zweite Steuergerät enthalten oder aber die zweite Kommunikationseinheit ohne das zweite Steuergerät.

Die Erfindung geht von dem Grundgedanken aus, dass eine Nachricht des zweiten Steuergerätes in der ersten Station nur vorliegen kann, wenn Zugwagen und Anhänger miteinander verbunden sind. Erst dann startet das Verfahren zum Aufbau des Netzwerks. Auf diese Weise werden vergebliche Versuche zum Aufbau des Netzwerks vermieden.

Nach einem weiteren Gedanken der Erfindung enthält die definierte Nachricht einen Status des zweiten Steuergerätes. Das heißt, mit der definierten Nachricht wird zugleich eine Information über den Zustand des Steuergeräts übermittelt.

Nach einem weiteren Gedanken der Erfindung handelt es sich bei dem zweiten Steuergerät um ein Bremsen-Steuergerät. Insbesondere enthält die definierte Nachricht einen Status einer Anti-Blockier-Regelung.

Nach einem weiteren Gedanken der Erfindung versendet die erste Station erst dann die zum Aufbau des drahtlosen Netzwerks erforderlichen Informationen, wenn in der ersten Station eine CAN-Nachricht (der zweiten Station) mit der Bezeichnung EBC1 vorliegt und ein erstes Bit des in der Nachricht enthaltenen "Trailer ABS Status" den Wert "0" aufweist. Der Aufbau des drahtlosen Fahrzeug-Netzwerks startet somit erst dann, wenn aus dem Bremsen-Steuergerät des Anhängers die genannte Status-Information in der ersten Station des Zugwagens vorliegt. Dadurch besteht eine hohe Sicherheit, dass das Bremsen-Steuergerät des Anhängers nach Aufbau des drahtlosen Fahrzeug-Netzwerks über letzteres überhaupt ansprechbar ist.

Vorteilhafterweise ist die physische Schnittstelle durch einen CAN-Datenbus oder eine PLC-Verbindung gebildet oder beinhaltet diese.

Gegenstand der Erfindung ist auch eine erste Station aufweisend ein erstes Steuergerät zur Durchführung des Verfahrens. Insbesondere handelt es sich bei dem Steuergerät um ein Gerät zur Steuerung einer Kommunikationseinheit, etwa eines WLAN-Moduls. Es kann sich aber auch um ein Bremsen-Steuergerät handeln, insbesondere mit integrierter Kommunikationseinheit.

Schließlich betrifft die Erfindung auch ein Computerprogramm, Computerprogrammprodukt oder eine App zur Durchführung des Verfahrens und/oder zur Verwendung mit dem Steuergerät der ersten Station. Enthalten ist vorzugsweise ein programmierter Algorithmus, der das Vorhandensein einer bestimmten Nachricht auf dem CAN-Datenbus prüft, ebenso deren Inhalt, und dass in Abhängigkeit vom Ausgang der Prüfung der Aufbau des drahtlosen Fahrzeug-Netzwerks startet.

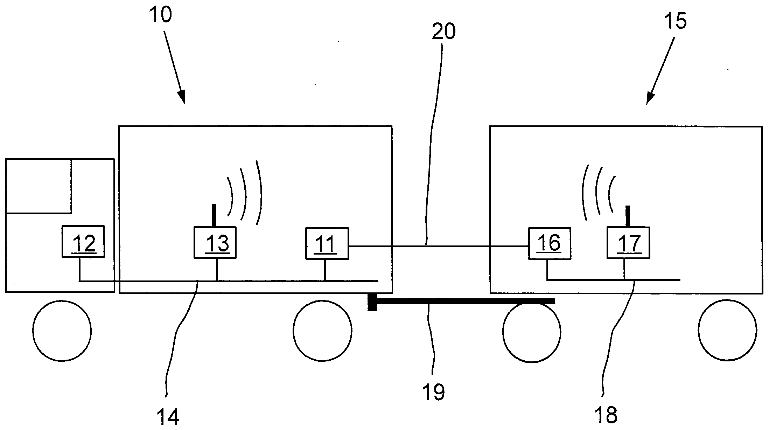

Weitere Merkmale der Erfindung ergeben sich aus der Beschreibung im Übrigen und aus den Ansprüchen. Vorteilhafte Ausführungsbeispiele der Erfindung werden nachfolgend anhand der einzigen Figur näher erläutert:
Ein Zugfahrzeug 10 ist mit einer pneumatischen Bremsanlage und einem elektronischen Bremssystem ausgestattet. Letzteres beinhaltet ein elektronisches Bremsen-Steuergerät 11. Außerdem vorgesehen sind ein Motor-Steuergerät 12 und
eine Kommunikationseinheit 13, sowie weitere, hier nicht eingezeichnete Elemente. Die Kommunikationseinheit 13 ermöglicht eine drahtlose Kommunikation per WLAN, insbesondere nach dem Standard IEEE 802.11. Die Steuergeräte 11, 12 und die Kommunikationseinheit 13 tauschen über einen CAN-Datenbus 14 Informationen aus bzw. sind an diesen angeschlossen. Auf dem CAN-Datenbus 14 liegen CAN-Nachrichten in einem in der Norm SAE J1939 definierten Format vor.

In einem Anhänger 15 sind ein Bremsen-Steuergerät 16 für ein elektronisches Bremssystem und eine Kommunikationseinheit 17 vorgesehen. Beide können über einen CAN-Datenbus 18 Informationen austauschen bzw. an den CAN-Datenbus 18 angeschlossen sein. Die Kommunikationseinheit 17 beinhaltet ein WLAN-Modul.

Der Anhänger 15 ist mit einer Deichsel 19 an das Zugfahrzeug 10 angekoppelt. Parallel dazu bestehen nicht gezeigte pneumatische Verbindungen zwischen Anhänger 15 und Zugfahrzeug 10, eine nicht gezeigte elektrische Verbindung (Versorgungsleitung) und eine Verbindung mittels einer Datenleitung 20. Letztere verbindet als physische Schnittstelle das Bremsen-Steuergerät 16 mit dem Bremsen-Steuergerät 11 des Zugfahrzeugs, sodass die beiden Steuergeräte 11, 16 unmittelbar Informationen nach dem Standard ISO 11992 austauschen können. Alternativ kann ein Datenaustausch zwischen den Steuergeräten 11, 16 über die nicht gezeigte elektrische Versorgungsleitung nach dem Prinzip der sogenannten Powerline Communication vorgesehen sein.

Gewünscht ist der Aufbau eines drahtlosen Fahrzeug-Netzwerks durch die beiden Kommunikationseinheiten 13, 17. Nach Aufbau des Netzwerks kann sich in dasselbe ein externes WLAN-Gerät, z. B. ein Smartphone, als Client einbuchen und sämtliche Informationen aus Zugfahrzeug 10 und Anhänger 15 abrufen oder sogar Steuerfunktionen ausführen.

Der Aufbau des drahtlosen Fahrzeug-Netzwerks mit Verifizierung der Netzwerk-Partner ist unter anderem in der DE 10 2014 015 394 A1 beschrieben. Darauf wird Bezug genommen.

Bremsen-Steuergerät 11 und Kommunikationseinheit 13 bilden zusammen eine erste Station des beabsichtigten Fahrzeug-Netzwerks. Analog dazu bilden das Bremsen-Steuergerät 16 und die Kommunikationseinheit 17 eine zweite Station im beabsichtigten Fahrzeug-Netzwerk.

Die Kommunikationseinheit 13 bzw. die erste Station versendet als ersten Schritt zum Aufbau des drahtlosen Netzwerks erforderliche Informationen. Diese werden von der Kommunikationseinheit 17 bzw. der zweiten Station aufgefangen und beantwortet. Zur Vermeidung unnötiger Aktivität der ersten Kommunikationseinheit 13 sendet diese erst dann, wenn in der Kommunikationseinheit 13 eine definierte Nachricht von der Kommunikationseinheit 17 vorliegt, wobei die definierte Nachricht zuvor über eine physische Schnittstelle übermittelt wurde. Physische Schnittstelle ist in diesem Falle die Datenleitung 20 oder analog eine elektrische Leitung zur Nutzung der Datenübertragung per Powerline Communication.

Sobald der Anhänger 15 über die nicht gezeigte elektrische Versorgungsleitung mit elektrischer Energie aus dem Zugfahrzeug 10 versorgt wird, steht auch dem Bremsen-Steuergerät 16 elektrische Energie zur Verfügung. Dieses übersendet eine definierte Nachricht an das Bremsen-Steuergerät 11 des Zugfahrzeugs 10. Das Steuergerät 11 wandelt die Nachricht in das Format gemäß SAE J1939 um und stellt die Nachricht auf dem CAN-Datenbus 14 zur Verfügung. Damit ist die definierte Nachricht für die Kommunikationseinheit 13 sichtbar.

Die definierte Nachricht enthält in diesem Fall einen sogenannten Trailer ABS Status mit der Suspect Parameter Number 1836 als Teil der CAN-Nachricht EBC1. Der Trailer ABS Status wird mit zwei Bit dargestellt. Sobald die Kommunikationseinheit 13 feststellt, dass das erste Bit des Trailer ABS Status eine "0" ist, startet die Kommunikationseinheit 13 den Aufbau des drahtlosen Fahrzeug-Netzwerks. Alle weiteren Schritte können dann wie in der DE 10 2014 015 394 A1 oder auf andere Weise ausgeführt werden.

Ein besonderer Vorteil des erfindungsgemäßen Verfahrens ist, dass der Aufbau des Fahrzeug-Netzwerks nur gestartet wird, wenn bereits eine Verbindung vom Zugfahrzeug zum Anhänger besteht. Dass die Verbindung besteht, wird anhand der definierten Nachricht des im Anhänger 15 vorgesehenen Steuergeräts 16 ermittelt. Das Verfahren ist nicht beschränkt auf Fahrzeuge mit CAN-Datenbus und/oder WLAN-Netzwerke. Die Daten können auch auf andere Weise innerhalb von Zugfahrzeug 10 und Anhänger 15 bzw. vom Anhänger 15 zum Zugfahrzeug 10 und umgekehrt ausgetauscht werden. Anstelle des WLAN können auch andere Funktechniken verwendet werden, etwa Bluetooth. Auch kann der konkrete Aufbau der Verbindung anders durchgeführt werden als in der DE 10 2014 015 394 A1 beschrieben. Insbesondere von Bedeutung ist nur der Beginn des Verfahrens zum Aufbau des Netzwerks.

## Patentansprüche

1. Verfahren zum Aufbau eines drahtlosen Fahrzeug-Netzwerks mit wenigstens einer ersten Station in einem Zugwagen (10) und einer zweiten Station in einem Anhänger (15), wobei die erste Station zum Aufbau des drahtlosen Netzwerks erforderliche Informationen versendet und ein der ersten Station zugeordnetes erstes Steuergerät (11) von einem der zweiten Station zugeordneten zweiten Steuergerät (16) über eine physische Schnittstelle (20) zwischen Zugwagen (10) und Anhänger (15) eine definierte Nachricht übermittelt bekommt, nachdem das zweite Steuergerät (16) mit elektrischer Energie versorgt ist und die beiden Steuergeräte (11, 16) über die physische Schnittstelle (20) miteinander verbunden sind, wobei die physische Schnittstelle (20) durch einen CAN-Datenbus oder eine PLC-Verbindung gebildet ist oder diese beinhaltet und wobei die erste Station erst dann die zum Aufbau des drahtlosen Netzwerks erforderlichen Informationen drahtlos versendet, wenn die definierte Nachricht in der ersten Station vorliegt, **dadurch gekennzeichnet, dass** das zweite Steuergerät (16) ein Bremsen-Steuergerät ist, und dass die definierte Nachricht einen Status einer Anti-Blockier-Regelung enthält.

2. Verfahren nach Anspruch 1, wobei die definierte Nachricht einen Status des zweiten Steuergeräts (16) enthält.

3. Verfahren nach Anspruch 1 oder 2, wobei die erste Station erst dann die zum Aufbau des drahtlosen Netzwerks erforderlichen Informationen versendet, wenn in der ersten Station eine CAN-Nachricht mit der Bezeichnung EBC1 vorliegt und ein erstes Bit des in der Nachricht enthaltenen "Trailer ABS Status" den Wert "0" aufweist.

4. Erste Station aufweisend ein erstes Steuergerät (11), wobei die erste Station eingerichtet ist zur Durchführung des Verfahrens nach einem der voranstehenden Ansprüche.

5. Computerprogramm, Computerprogrammprodukt oder App, umfassend Befehle, die bei der Ausführung durch das Steuergerät der ersten Station nach Anspruch 4, das Steuergerät veranlassen, das Verfahren nach einem der Ansprüche 1 bis 3 auszuführen.

## Claims

1. A method for establishing a wireless vehicle network with at least a first station in a towing vehicle (10) and a second station in a trailer (15), wherein the first station sends the required information for establishing the wireless network and a control device (11) assigned to the first station receives a defined message from a control device (16) assigned to the second station via a physical interface (20) between the towing vehicle (10) and trailer (15), after which the second control device (16) is supplied with electrical energy and the two control devices (11, 16) are connected to each other via the physical interface (20), wherein the physical interface (20) is formed by a CAN data bus or a PLC connection or contains these and wherein the first station only sends wirelessly the information required for establishing the wireless network when the defined message is present in the first station, **characterized in that** the second control device (16) is a brake control device, and **in that** the defined message contains a status of an anti-blocking regulation.

2. The method according to claim 1, wherein the defined message contains a status of the second control device (16).

3. The method according to claim 1 or 2, wherein the first station only sends the information required for establishing the wireless network when a CAN message with the designation EBC1 is present in the first station and a first bit of the "Trailer ABS Status" contained in the message has the value "0".

4. A first station having a first control device (11), wherein the first station is set up to carry out the method according to any of the foregoing claims.

5. A computer program, computer program product or application, comprising commands which, during the execution by the control device of the first station according to claim 4, cause the control device to execute the method according to any of claims 1 to 3.

## Revendications

1. Procédé pour implémenter un réseau sans fil de véhicule avec au moins une première station dans un véhicule tracteur (10) et une deuxième station dans une remorque (15), dans lequel la première station envoie des informations nécessaires à l'implémentation du réseau sans fil et un premier appareil de commande (11) associé à la première station reçoit par transmission un message défini d'un deuxième appareil de commande (16) associé à la deuxième station par l'intermédiaire d'une interface physique (20) entre le véhicule tracteur (10) et la remorque (15), après que le deuxième appareil de commande (16) est alimenté en énergie électrique et les deux appareils de commande (11, 16) sont reliés l'un à l'autre par l'intermédiaire de l'interface physique (20), dans lequel l'interface physique (20) est formée par un bus de données CAN ou une liaison CPL ou comporte ceux-ci et dans lequel la première station n'envoie sans fil les informations nécessaires à l'implémentation du réseau sans fil que lorsque le message défini est présent dans la première station, **caractérisé en ce que** le deuxième appareil de commande (16) est un appareil de commande de freinage, et que le message défini contient un statut d'une régulation antiblocage.

2. Procédé selon la revendication 1, dans lequel le message défini contient un statut du deuxième appareil de commande (16).

3. Procédé selon la revendication 1 ou 2, dans lequel la première station n'envoie les informations nécessaires à l'implémentation du réseau sans fil que lorsqu'un message CAN avec la désignation EBC1 est présent dans la première station ou qu'un premier bit du « statut ABS de remorque » contenu dans le message présente la valeur « 0 ».

4. Première station présentant un premier appareil de commande (11), dans laquelle la première station est conçue pour mettre en œuvre le procédé selon l'une quelconque des revendications précédentes.

5. Programme informatique, produit-programme informatique ou application comportant des instructions, qui amènent l'appareil de commande, lors de la mise en œuvre par l'appareil de commande de la première station selon la revendication 4, à mettre en œuvre le procédé selon l'une quelconque des revendications 1 à 3.
